Europäisches Patentamt

European Patent Office

Office européen des brevets

(19)

(11) **EP 0 906 148 B1**

(12) **EUROPÄISCHE PATENTSCHRIFT**

(45) Veröffentlichungstag und Bekanntmachung des Hinweises auf die Patenterteilung:
**09.05.2001 Patentblatt 2001/19**

(51) Int Cl.⁷: **B01D 53/86**, B01D 53/30, G05D 21/02, C03B 5/00

(21) Anmeldenummer: **97928147.4**

(22) Anmeldetag: **05.06.1997**

(86) Internationale Anmeldenummer:
**PCT/EP97/02919**

(87) Internationale Veröffentlichungsnummer:
**WO 97/48481 (24.12.1997 Gazette 1997/55)**

(54) **VERFAHREN ZUR REGELUNG ODER STEUERUNG DES GEHALTES AN NOx IN ABGASEN, DIE BEIM BETRIEB VON GLASSCHMELZÖFEN MIT MEHREREN BRENNERN, DIE IM WECHSEL BETRIEBEN WERDEN, ANFALLEN**

PROCESS FOR REGULATING OR CONTROLLING THE NOx CONTENT OF EXHAUST GASES GIVEN OFF DURING THE OPERATING OF GLASS MELTING FURNACES WITH SEVERAL BURNERS RUN ALTERNATELY

PROCEDE DE REGULATION OU DE COMMANDE DE LA TENEUR EN NOx DE GAZ BRULES DEGAGES PENDANT LE FONCTIONNEMENT D'ARCHES A FRITTER AVEC PLUSIEURS BRULEURS ACTIONNES EN ALTERNANCE

(84) Benannte Vertragsstaaten:
**DE FR NL**

(30) Priorität: **20.06.1996 DE 19624619**

(43) Veröffentlichungstag der Anmeldung:
**07.04.1999 Patentblatt 1999/14**

(73) Patentinhaber: **mg technologies ag**
**60325 Frankfurt am Main (DE)**

(72) Erfinder:
• **BEISSWENGER, Hans**
**D-65812 Bad Soden (DE)**
• **HASSELWANDER, Klaus**
**D-61440 Oberursel (DE)**
• **HERDEN, Hansjörg**
**D-63110 Rodgau (DE)**
• **MAYER-SCHWINNING, Gernot**
**D-61352 Bad Homburg (DE)**
• **SAMANT, Gurudas**
**D-35112 Fronhausen (DE)**
• **LUDWIG, Peter**
**D-54413 Beuren (DE)**

(74) Vertreter: **Revesz, Veronika**
**c/o Lurgi AG**
**Abt. Patente, A-VRP**
**Lurgiallee 5**
**60295 Frankfurt/Main (DE)**

(56) Entgegenhaltungen:
DE-A- 2 803 876    DE-A- 3 337 793
DE-A- 3 631 729    DE-A- 4 139 862
DE-A- 4 237 705    DE-A- 4 434 943
GB-A- 2 132 112    US-A- 4 328 020

• **ABB REVIEW, Nr. 9, 1.Januar 1993, Seiten 13-20, XP000416290 "FUZZY-BASED CONTROLLER IMPROVES DENOX PERFORMANCE IN POWER PLANTS"**

**Beschreibung**

Die Erfindung bezieht sich auf ein Verfahren zur Regelung oder Steuerung des Gehaltes an $NO_x$ in Abgasen, die beim Betrieb von Glasschmelzöfen mit mehreren Brennern, die im Wechsel betrieben werden, anfallen.

Verfahren zur Reduzierung von Stickoxiden in Abgasen sind bekannt. In der DE-OS-3615021 wird ein Verfahren zum selektiven katalytischen Reduzieren der Stickoxide aus Verbrennungsmotor-Abgasen unter Zugabe von Ammoniak in einem Reaktor beschrieben. Bei diesem Verfahren ist vorgesehen, daß die Ammoniak-Zugabe in Abhängigkeit von der $NO_x$-Konzentration in dem Abgas erfolgt und daß die $NO_x$-Konzentration indirekt ermittelt wird durch Messen von Betriebsparametern des Verbrennungsmotors und nachfolgendem Berechnen unter Berücksichtigung von Kennlinienfeldern der Stickstoffmonoxid- und Stickstoffdioxid-Konzentration in Abhängigkeit von mindestens einem ausgewählten Betriebsparameter am Verbrennungsmotor.

In Römpps Chemie-Lexikon, 8. Auflage, 1981, Seiten 1484 bis 1490 wird der Betrieb von Glasschmelzöfen ausführlich beschrieben. Bei den Glasschmelzöfen handelt es sich meist um Wannenöfen, in denen seitlich mehrere Brenner angeordnet sind, die im Wechsel betrieben werden. Die eigentliche Beheizung der Glasschmelzöfen erfolgt meist mit Ferngas, Heizöl oder Erdgas. Die anfallenden Abgase enthalten Stickoxide, bedingt durch Brennstoffe, hohen Temperaturen oder Zusätze. Bei der Entstickung von Abgasen, muß der $NO_x$-Gehalt im Reingas aus gesetzlichen Gründen immer in Verbindung mit dem Gehalt an $O_2$ im Reingas überwacht werden, was zur Folge hat, daß in der Praxis der Sollwert des Gehalts an $NO_x$, $NO_x$soll, in einen normierten Sollwert $NO_x$soll n transformiert wird. Für die Normierung gilt in der Regel der folgende Zusammenhang:

$$NO_x soll\ n = NO_x\ soll \cdot \frac{(21 - O_2\ ist)}{(21 - 8)}$$

Diese Normierung weist jedoch dann Nachteile auf, wenn in den Glasschmelzöfen mehrere Brenner angeordnet sind, die im Wechsel betrieben werden. Wird ein Brenner während einer Feuerpause abgeschaltet, so sinkt der $NO_x$-Gehalt des Abgases relativ stark ab. Bei der Regelung des Gehalts an $NO_x$ in den Abgasen mit Hilfe eines einfachen Regelkreises ist die eingedüste Menge an $NH_3$, das mit den Stickoxiden in bekannter Weise reagiert, abhängig von der Regelabweichung xd, wobei gilt:

$$xd = NO_x soll\ n - NO_x'$$

Sinkt der Gehalt an $NO_x$ in den Abgasen, so verkleinern sich sowohl der Wert $NO_x$soll n als auch der Wert $NO_x'$,

was zur Folge hat, daß die Regelabweichung xd sich nicht oder nur in unbedeutender Weise ändert. Da sich die Regelabweichung xd bei Erniedrigung des Gehaltes an $NO_x$ in den Abgasen nur unwesentlich ändert, bleibt die zuzuführende Menge an $NH_3$ in der Entstickungsanlage ebenfalls fast konstant was dazu führt, daß mehr $NH_3$ eingedüst wird, als mit den Stickoxiden umgesetzt werden. kann. Dies wiederum hat zur Folge, daß der Anteil an $NH_3$ im Reingas in der Regel dann die zulässigen Grenzwerte überschreitet. Ein weiterer Nachteil dieser herkömmlichen, bekannten Regelung liegt darin begründet, daß die Entstickungsanlage in der Regel nicht in unmittelbarer Nähe der Glasschmelzöfen angeordnet wird. Das Abgas braucht somit eine Zeit, um vom Glasschmelzofen zum Reingasstutzen der Entstickungsanlage zu gelangen, in welchem in der Regel die Reingaswerte gemessen werden. Wird eine Feuerpause eines Brenners eingelegt, so wird in der Entstickungsanlage ein Gehalt an $NO_x$ gemessen, der eine höhere Menge an $NH_3$ erforderlich macht, als dies bei den tatsächlichen Werten im Glasschmelzofen eigentlich erforderlich ist. Es muß somit eine gewisse Zeit verstreichen, bis über die Regelung mit einem einfachen Regelkreis auf die einzelnen Feuerpausen der Brenner in den Glasschmelzöfen reagiert werden kann.

Der Erfindung liegt die Aufgabe zugrunde, ein Verfahren zur Regelung oder Steuerung des Gehaltes an $NO_x$ in Abgasen zu schaffen, die beim Betrieb von Glasschmelzöfen mit mehreren Brennern, die im Wechsel betrieben werden, anfallen, wobei nicht auf die bekannte Normierung des Sollwertes $NO_x$soll verzichtet werden muß. Mit dem Verfahren soll ferner eine relativ schnelle Reaktion auf schwankende $NO_x$-Gehalte bei Feuerpausen einzelner Brenner im Glasschmelzofen möglich sein.

Die der Erfindung zugrunde liegende Aufgabe wird durch ein Verfahren zur Regelung oder Steuerung des Gehaltes an $NO_x$ in Abgasen, die beim Betrieb von Glasschmelzöfen mit mehreren Brennern, die im Wechsel betrieben werden, anfallen, gelöst, bei dem der Sollwert des Gehalts an $NO_x$, $NO_x$soll, einem Multiplizierer zugeführt wird, gleichzeitig der Gehalt an $O_2$ im Reingas, $O_2$ist, kontinuierlich gemessen und der in einem ersten Meßumformer erfaßte Gehalt an $O_2$, $O_2$ist', ebenfalls dem Multiplizierer zugeführt wird und im Multiplizierer eine Normierung des Sollwertes $NO_x$soll in einen normierten Sollwert $NO_x$soll n erfolgt, wobei für die Normierung gilt:

$$NO_x\ soll\ n = NO_x\ soll \cdot \frac{(21 - O_2\ ist)}{(21-8)}$$

und bei dem der normierte Sollwert $NO_x$soll n mit dem von einem zweiten Meßumformer erfaßten Gehalt an $NO_x$ im Reingas, $NO_x'$, verglichen wird, die sich aus diesem Vergleich ergebende Regeldifferenz xd einem Regler zugeführt wird, der die der Entstickungsanlage zu-

zuführende Menge an $NH_3$ als Stellgröße y zur Regelung des Gehalts an $NO_x$ als Regelgröße anpaßt und bei dem sowohl der Beginn einer Feuerpause $FP^+$ als auch das Ende einer Feuerpause $FP^-$ jeweils als Signal einem Binärsignalgeber zugeführt werden, der die Signale zeitverzögert als zeitverzögerter Beginn einer Feuerpause $FP_z^+$ oder als zeitverzögertes Ende einer Feuerpause $FP_z^-$ dem Regler zuführt, der die Regelung bei Erhalt des Signals $FP_z^+$ unterbricht und die Menge an $NH_3$ auf einen niedrigeren konstanten Festwert F1 über eine Steuerung einstellt, der von dem zweiten Meßumformer erfaßte Gehalt an $NO_x$ im Reingas, $NO_x'$, einem Speicherglied zugeführt wird, der dort in einen höheren konstanten Festwert F2 als Menge an $NH_3$ transformiert wird, der ebenfalls dem Regler zugeführt wird, und bei dem, sobald der Regler das Signal $FP_z^-$ erhalten hat, der Festwert F1 auf den Festwert F2 über eine Steuerung eingestellt wird und direkt anschließend die Regelung fortgesetzt wird. Als Glasschmelzöfen werden in der Regel Häfenöfen oder Wannenöfen eingesetzt, die kontinuierlich oder diskontinuierlich arbeiten und die mehrere Brenner aufweisen. Unter die Bezeichnung "Brenner" fallen neben den Beheizungen mit Ferngas, Heizöl oder Erdgas auch Heizelektroden. Mit der Bezeichnung "Feuerpause" ist die Unterbrechung des Betriebs mindestens eines Brenners gemeint. Das Signal des Beginns einer Feuerpause $FP^+$ wird unmittelbar dann gegeben, wenn der Brenner abgeschaltet wird. Das Signal Ende einer Feuerpause $FP^-$ wird unmittelbar dann gegeben, wenn der Brenner wieder eingeschaltet wird. Das Signal zeitverzögerter Beginn einer Feuerpause $FP_z^+$ wird nach einer gewissen Zeit nach dem Abschalten des Brenners vom Binärsignalgeber abgegeben. Das Signal des zeitverzögerten Endes einer Feuerpause $FP_z^-$ wird nach einer gewissen Zeit nach dem erneuten Anfahren des Brenners vom Binärsignalgeber abgegeben. Bei der Definition dieser Zeitverzögerung $\triangle t$, die in beiden Fällen gleich groß ist, sind zwei Definitionen aus verfahrenstechnischen Gründen erforderlich. Liegt die Temperatur der Abgase zwischen 750 und 1100°C, so kann die Entstickung durch Zugabe von $NH_3$ ohne Anwesenheit eines Katalysators erfolgen. In diesem Falle handelt es sich bei $\triangle t$ um diejenige Zeit, die das Abgas benötigt, um vom Glasschmelzofen zur $NH_3$-Aufgabestelle in der Entstickungsanlage zu gelangen. Liegen die Temperaturen der Abgase im Bereich zwischen 300 und 450°C, so ist für die Entstickung neben dem Kontaktieren mit $NH_3$ auch ein Kontaktieren mit einem geeigneten Katalysator, beispielsweise Titandioxid, erforderlich. In diesem Fall handelt es sich bei $\triangle t$ um diejenige Zeit, die das Abgas benötigt, um vom Glasschmelzofen zu derjenigen Stelle in der Entstickungsanlage zu gelangen, in der es erstmals sowohl mit $NH_3$ als auch mit dem eingesetzten Katalysator gemeinsam kontaktiert wird. Bei dem niedrigeren konstanten Festwert F1 handelt es sich um 5 bis 20 % der unmittelbar vor der Unterbrechung der Regelung eingebrachten Menge an $NH_3$. Bei der Transformation des Festwerts F2 werden Werte des Gehalts an $NO_x$ im Reingas, $NO_x'$, als Ausgangsgröße verwendet, wobei das Speicherglied verschiedenartig arbeiten kann. Bei dem Festwert F2 kann es sich beispielsweise um diejenige Menge an $NH_3$ handeln, die erforderlich war, den zuletzt gemessenen Gehalt an $NO_x$ im Reingas einzustellen. Aus den zuletzt gemessenen Gehalten an $NO_x$ im Reingas können in vorteilhafter Weise jedoch auch Mittelwerte gebildet werden, aus denen sich dann der Festwert F2 berechnen läßt. Es hat sich in überraschender Weise gezeigt, daß durch das erfindungsgemäße Verfahren die Nachteile der bekannten Normierung vermieden werden können, wobei gleichzeitig relativ schnell auf schwankende $NO_x$-Gehalte in den Glasschmelzöfen, bedingt durch die Feuerpausen der einzelnen Brenner, reagiert werden kann. Bei dem erfindungsgemäßen Verfahren kommt es somit nicht zu einem Überschreiten der zulässigen Grenzwerte von $NH_3$ im Reingas.

Eine bevorzugte Ausgestaltung der Erfindung besteht darin, daß der konstante Festwert F1 6 bis 15% der unmittelbar vor der Unterbrechung der Regelung eingebrachten Menge an $NH_3$ beträgt. Dies reicht in der Regel aus, um den noch vorhandenen Gehalt an $NO_x$ in den Abgasen in ausreichender Menge umzusetzen, wobei gleichzeitig ein Überschreiten der zulässigen Grenzwerte an $NH_3$ im Reingas in vorteilhafter und einfacher Weise vermieden werden kann.

Gemäß einer weiteren bevorzugten Ausgestaltung der Erfindung erfolgt die Transformation im Speicherglied durch die Bildung eines Mittelwertes, gebildet aus den über einen Zeitraum von 5 bis 40 min gemessenen Gehalten an $NO_x$ im Reingas, $NO_x'$. Dabei ist vorteilhaft, daß die Regelung mit einem Festwert F2 fortgesetzt werden kann, der relativ nahe an der zuzuführenden optimalen Menge an $NH_3$ liegt, wenn das Signal $FP_z^-$ vom Binärsignalgeber abgegeben wird, also zum Zeitpunkt $tFP_z^-$.

Nach einer weiteren Ausgestaltung der Erfindung umfaßt der Zeitraum 12 bis 18 min. Dieser Zeitraum reicht in der Regel aus, um in den meisten Fällen einen transformierten Festwert F2 zu erhalten, mit dem sich die Regelung schnell und problemlos fortsetzten läßt. In besonders vorteilhafter Weise umfaßt der Zeitraum 15 min.

Gemäß einer weiteren bevorzugten Ausgestaltung der Erfindung werden die Abgase vor der Entfernung von $NO_x$ nach Verlassen der Glasschmelzöfen von $SO_x$, HCl, HF und Staub befreit. Dies wirkt sich vorteilhaft auf die Durchführung des erfindungsgemäßen Verfahrens aus, da nachteilige Einflüsse, bedingt durch die Schadstoffe $SO_x$, HCl, HF und Staub, vermieden werden. Die Entfernung von $SO_x$, HCl und HF bei 300 bis 500°C kann dabei in vorteilhafter Weise in einer klassischen oder zirkulierenden Wirbelschicht oder in einem Flugstromreaktor erfolgen. Zur Entfernung von $SO_x$, HCl und HF werden die Abgase beispielsweise mit Ca$(OH)_2$ kontaktiert.

Eine weitere Ausgestaltung der Erfindung besteht darin, daß die Abgase zunächst von $SO_x$, HCl und HF befreit werden und anschließend durch einen elektrostatischen Staubabscheider geleitet werden. Als elektrostatischer Staubabscheider werden trocken arbeitende Elektrofilter eingesetzt. Dabei ist vorteilhaft, daß der elektrostatische Abscheider nicht mit $SO_x$, HCl und HF kontaktiert wird, was einen relativ geringen Wartungsaufwand ermöglicht.

Nach einer weiteren Ausgestaltung der Erfindung erfolgt die Entfernung von $SO_x$, HCl und HF in einer Wirbelschicht durch Zugabe von $Ca(OH)_2$. Dies ermöglicht eine relativ vollständige Entfernung der Schadstoffe $SO_x$, HCl und HF mit hohem Wirkungsgrad.

Die Erfindung wird nachfolgend anhand der Zeichnung (Fig.1 bis 3) näher und beispielhaft erläutert.

Fig. 1 zeigt den Signalflußplan nach DIN 19226 des erfindungsgemäßen Verfahrens zur Regelung oder Steuerung des Gehaltes an $NO_x$.

Fig. 2 zeigt den Signalflußplan nach DIN 19226 der bekannten Regelung des Gehaltes an $NO_x$ in Abgasen, die beim Betrieb von Glasschmelzöfen mit mehreren Brennern, die im Wechsel betrieben werden, anfallen.

Fig. 3 zeigt beispielhaft den Durchsatz der der Entstickungsanlage zuzuführenden Menge an $NH_3$, $VNH_3$ als Funktion der Zeit t nach dem erfindungsgemäßen Verfahren.

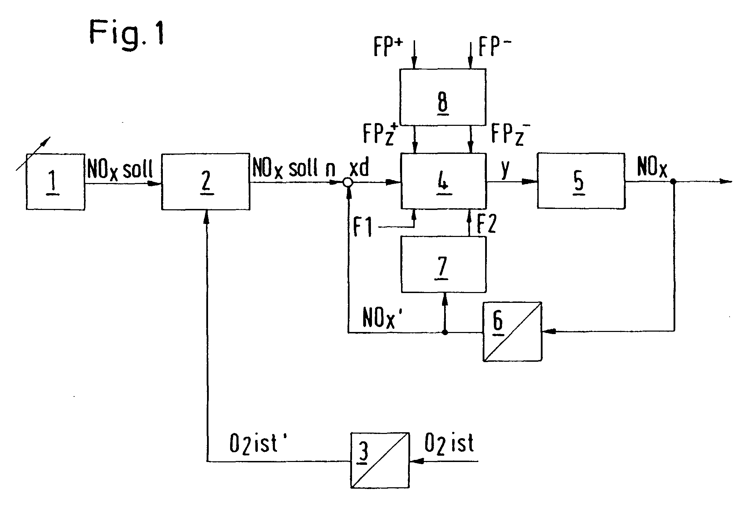

In Fig. 1 ist das erfindungsgemäße Verfahren zur Regelung oder Steuerung des Gehaltes an $NO_x$ in Abgasen dargestellt. Der vom Sollwertgeber (1) vorgegebene Sollwert $NO_x$soll wird dem Multiplizierer (2) zugeführt. Gleichzeitig wird der Gehalt an $O_2$ im Reingas, $O_2$ist, gemessen und der in dem ersten Meßumformer (3) erfaßte Gehalt an $O_2$, $O_2$ist', ebenfalls dem Multiplizierer (2) zugeführt. Im Multiplizierer (2) erfolgt die Normierung des Sollwertes $NO_x$soll in den normierten Sollwert $NO_x$soll n unter Berücksichtigung des im ersten Meßumformer (3) erfaßten Gehalts $O_2$ist'. Der normierte Sollwert $NO_x$ soll n wird mit dem von einem zweiten Meßumformer (6) erfaßten Gehalt an $NO_x$ im Reingas, $NO_x'$, verglichen. Die sich daraus ergebende Regeldifferenz xd wird einem Regler (4) zugeführt, der die der Entstickungsanlage (5) zuzuführende Menge an $NH_3$ als Stellgröße y zur Regelung des Gehalts an $NO_x$ als Regelgröße anpaßt. Als Regler (4) ist dabei die Kombination aus Regler, Stellgerät und Leitgerät zu verstehen. Das Signal des Beginns einer Feuerpause $FP^+$ als auch das Signal des Endes einer Feuerpause $FP^-$ wird jeweils einem Binärsignalgeber (8) zugeführt. Zeitverzögert gibt der Binärsignalgeber (8) die Signale $FP_z^+$ oder $FP_z^-$ an den Regler (4) weiter. Bei Erhalt des Signals $FP_z^+$ wird die Regelung vom Regler (4) unterbrochen und die Menge an $NH_3$ auf einen niedrigeren konstanten Festwert F1 über eine Steuerung eingestellt. Der von dem zweiten Meßumformer (6) erfaßte Gehalt an $NO_x$ im Reingas, $NO_x'$, wird einem Speicherglied (7) zugeführt, der dort in einen höheren konstanten Festwert F2 als Menge an $NH_3$ transformiert wird. Das Speicherglied (7) wird dabei in vorteilhafter Weise zur Bildung des Mittelwertes, gebildet aus dem über einen Zeitraum von 5 bis 30 min gemessenen Gehalten an $NO_x$ im Reingas, $NO_x'$, eingesetzt, aus dem dann der zugehörige Festwert F2 als Menge an $NH_3$ berechnet und dem Regler (4) zugeführt wird. Sobald der Regler (4) das Signal $FP_z^-$ erhalten hat, erfolgt eine Umschaltung des Festwertes F1 auf den Festwert F2 über eine Steuerung. Direkt anschließend wird danach die Regelung fortgesetzt. Vor der Entfernung von $NO_x$ können die Abgase in vorteilhafter Weise nach Verlassen der Glasschmelzöfen von $SO_x$, HCl, HF und Staub befreit werden (nicht dargestellt).

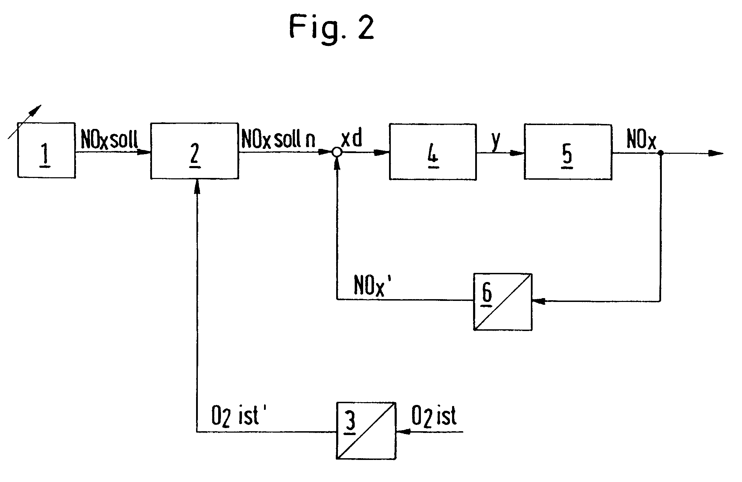

In Fig. 2 ist die allgemein bekannte Regelung des Gehalts an $NO_x$ in Abgasen, die beim Betrieb von Glasschmelzöfen mit mehreren Brennern, die im Wechsel betrieben werden, anfallen, mit einem einfachen Regelkreis dargestellt. Die bekannte Normierung und die träge Regelung infolge des relativ langen Weges, den die Abgase von der Aufgabestelle des $NH_3$ bis zur Reingasmeßstelle in der Entstickungsanlage (5) zurücklegen müssen, wirken sich bei dieser bekannten Regelung nachteilig aus.

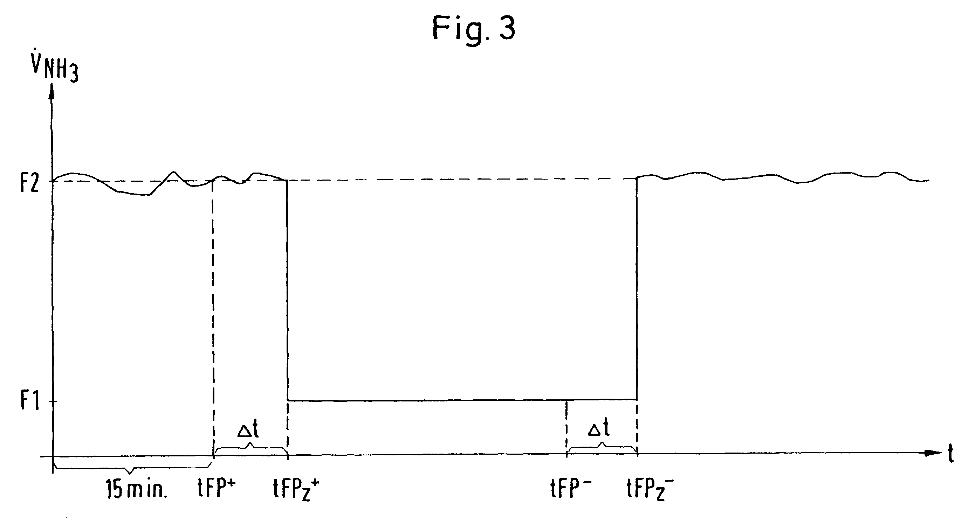

In Fig. 3 ist die Funktion der der Entstickungsanlage zuzuführenden Menge an $NH_3$ $VNH_3$ als Funktion der Zeit t beispielhaft dargestellt. 15 min vor dem Zeitpunkt, an dem das Signal $FP^+$ gegeben wird, also 15 min vor $tFP^+$, werden die einzelnen gemessenen Gehalte an $NO_x$ im Reingas, $NO_x'$, im Speicherglied (7) gespeichert, der Mittelwert gebildet und anschließend daraus ein Festwert F2 als Menge an $NH_3$ definiert. Nach der Zeitverzögerung $\Delta t$, zum Zeitpunkt $tFP_z^+$, an welchem das Signal $FP_z^+$ vom Binärsignalgeber (8) an den Regler (4) weitergegeben wird, wird die Regelung unterbrochen und der Graph der Funktion fällt schlagartig auf einen Festwert F1 ab und wird konstant gehalten. Wird das Signal des Endes einer Feuerpause $FP^-$ zum Zeitpunkt $tFP^-$ gegeben, so erfolgt ein erneutes Ansteigen des Graphs von dem Festwert F1 auf den Festwert F2 erst nach Ablauf der Zeitverzögerung $\Delta t$ genau zu dem Zeitpunkt $tFP_z^-$, an welchem das Signal $FP_z^-$ vom Binärsignalgeber an den Regler (4) weitergegeben wird. Dies hat den Vorteil, daß es zu einer relativ raschen Umschaltung vom Festwert F1 zum Festwert F2 zum Zeitpunkt $tFP_z^-$ kommt und diese Umstellung mit keinerlei regelungstechnischem Verzug verbunden ist. Unmittelbar zur Zeit $tFP_z^-$ wird der Festwert F2 erreicht und die Regelung kann, ausgehend von diesem Festwert F2, der sehr nahe an dem optimalen Wert der zu diesem Zeitpunkt zuzuführenden Menge an $NH_3$ liegt, in vorteilhafter Weise fortgesetzt werden. Bei der Zeitverzögerung $\Delta t$ handelt es sich entweder um die Zeit, die das Abgas benötigt, um von dem Glasschmelzofen zur Aufgabestelle des $NH_3$ zu gelangen oder um die Zeit, die das Abgas benötigt, um von dem Glasschmelzofen zu derjenigen Stelle zu gelangen, an welcher das Abgas zum ersten Mal gemeinsam mit $NH_3$ und einem Katalysator, beispielsweise Titandioxid, kontaktiert wird. Dies ist abhängig von den Temperaturen des Abgases. In Fig. 3 wurde die 15 minütige Zeitspanne nur beispielhaft angeführt. Sie kann einen Zeitraum von 5 bis 40 min, in vorteilhafter Weise 12 bis 18 min umfassen.

**Patentansprüche**

1. Verfahren zur Regelung oder Steuerung des Gehaltes an $NO_x$ in Abgasen, die beim Betrieb von Glasschmelzöfen mit mehreren Brennern, die im Wechsel betrieben werden, anfallen, bei dem der Sollwert des Gehalts an $NO_x$, $NO_x$soll, einem Multiplizierer (2) zugeführt wird, gleichzeitig der Gehalt an $O_2$ im Reingas, $O_2$ist, kontinuierlich gemessen und der in einem ersten Meßumformer (3) erfaßte Gehalt an $O_2$, $O_2$ist', ebenfalls dem Multiplizierer (2) zugeführt wird und im Multiplizierer (2) eine Normierung des Sollwertes $NO_x$soll in einen normierten Sollwert $NO_x$soll n erfolgt, wobei für die Normierung gilt:

$$NO_x soll\ n = NO_x\ soll \cdot \frac{(21 - O_2\ ist)}{(21 - 8)}$$

und bei dem der normierte Sollwert $NO_x$soll n mit dem von einem zweiten Meßumformer (6) erfaßten Gehalt an $NO_x$ im Reingas, $NO_x$', verglichen wird, die sich aus diesem Vergleich ergebene Regeldifferenz xd einem Regler (4) zugeführt wird, der die der Entstickungsanlage (5) zuzuführende Menge an $NH_3$ als Stellgröße y zur Regelung des Gehalts an $NO_x$ als Regelgröße anpaßt und bei dem sowohl der Beginn einer Feuerpause $FP^+$ als auch das Ende einer Feuerpause $FP^-$ jeweils als Signal einem Binärsignalgeber (8) zugeführt werden, der die Signale zeitverzögert als zeitverzögerter Beginn einer Feuerpause $FP_z^+$ oder als zeitverzögertes Ende einer Feuerpause $FP_z^-$ dem Regler (4) zuführt, der die Regelung bei Erhalt des Signals $FP_z^+$ unterbricht und die Menge an $NH_3$ auf einen niedrigeren konstanten Festwert F1 über eine Steuerung einstellt, der von dem zweiten Meßumformer (6) erfaßte Gehalt an $NO_x$ im Reingas, $NO_x$', einem Speicherglied (7) zugeführt wird, der dort in einen höheren konstanten Festwert F2 als Menge an $NH_3$ transformiert wird, der ebenfalls dem Regler (4) zugeführt wird, und bei dem, sobald der Regler (4) das Signal $FP_z^-$ erhalten hat, der Festwert F1 auf den Festwert F2 über eine Steuerung eingestellt wird und direkt anschließend die Regelung fortgesetzt wird.

2. Verfahren nach Anspruch 1, bei dem der konstante Festwert F1 6 bis 15 % der unmittelbar vor der Unterbrechung der Regelung eingebrachten Menge an $NH_3$ beträgt.

3. Verfahren nach Anspruch 1 oder Anspruch 2, bei dem die Transformation im Speicherglied (7) durch die Bildung eines Mittelwertes, gebildet aus den über einen Zeitraum von 5 bis 40 min gemessenen Gehalten an $NO_x$ im Reingas, $NO_x$', erfolgt.

4. Verfahren nach Anspruch 3, bei dem der Zeitraum 12 bis 18 min umfaßt.

5. Verfahren nach einem der Ansprüche 1 bis 4, bei dem die Abgase vor der Entfernung von $NO_x$ nach Verlassen der Glasschmelzöfen von $SO_x$, HCl, HF und Staub befreit werden.

6. Verfahren nach Anspruch 5, bei dem die Abgase zunächst von $SO_x$, HCl und HF befreit werden und anschließend durch einen elektrostatischen Staubabscheider geleitet werden.

7. Verfahren nach Anspruch 5 oder 6, bei dem die Entfernung von $SO_x$, HCl und HF in einer Wirbelschicht durch Zugabe von $Ca(OH)_2$ erfolgt.

**Claims**

1. A method of regulating or controlling the content of $NO_x$ in exhaust gases produced during the operation of glassmelting furnaces with several burners which are operated in alternation, where the setpoint of the content of $NO_x$, $NO_x$set, is supplied to a multiplier (2), at the same time the content of $O_2$ in the pure gas, $O_2$act, is measured continuously, and the content of $O_2$ detected in a first transducer (3), $O_2$act', is likewise supplied to the multiplier (2), and in the multiplier (2) a standardization of the setpoint $NO_x$set into a standardized setpoint $NO_x$set n is effected, where the following applies for the standardization:

$$NO_x\ set\ n = NO_x\ set \cdot \frac{(21 - O_2 act)}{(21-8)}$$

and where the standardized setpoint $NO_x$set n is compared with the content of $NO_x$ in the pure gas detected by a second transducer (6), $NO_x$', the deviation xd resulting from this comparison is supplied to a regulator (4), which adapts the amount of $NH_3$ to be supplied to the denitrating plant (5) as a correcting variable y for regulating the content of $NO_x$ as regulating variable, and where both the beginning of a combustion break $FP^+$ and the end of a combustion break $FP^-$ are each supplied as a signal to a binary signal generator (8), which with a time delay supplies the signals as time-delayed beginning of a combustion break $FP_z^+$ or as time-delayed end of a combustion break $FP_z^-$ to the regulator (4), which interrupts the regulation upon receipt of the signal $FP_z^+$ and adjusts the amount of $NH_3$ to a lower constant fixed value F1 via a control, the amount of $NO_x$ in the pure gas detected by the second transducer (6), $NO_x'$, is supplied to a memory element (7), is transformed there into a higher constant fixed value F2 as amount of $NH_3$, is likewise supplied to the regulator (4), and where, as soon as the regulator (4) has received the signal $FP_z^-$, the fixed value F1 is adjusted to the fixed value F2 via a control, whereafter the regulation is continued immediately.

2. The method as claimed in claim 1, where the constant fixed value F1 is 6 to 15 % of the amount of $NH_3$ introduced immediately before the interruption of the regulation.

3. The method as claimed in claim 1 or claim 2, where the transformation in the memory element (7) is effected through formation of an average, formed from the contents of $NO_x$ in the pure gas, $NO_x'$, measured over a period of 5 to 40 min.

4. The method as claimed in claim 3, where the period comprises 12 to 18 min.

5. The method as claimed in any of claims 1 to 4, where the exhaust gases are liberated from $SO_x$, HCl, HF and dust prior to the removal of $NO_x$ upon leaving the glassmelting furnaces.

6. The method as claimed in claim 5, where the exhaust gases are first of all liberated from $SO_x$, HCl and HF and are then passed through an electrostatic dust separator.

7. The method as claimed in claim 5 or 6, where the removal of $SO_x$, HCl and HF is effected in a fluidized bed through addition of $Ca(OH)_2$.

**Revendications**

1. Procédé de régulation ou de commande de la teneur en $NO_x$ de gaz brûlés qui se forment pendant le fonctionnement de fours de fusion du verre ayant plusieurs brûleurs qui fonctionnent en alternance, dans lequel on envoie la valeur de consigne de la teneur en $NO_x$, $NO_x$soll, à un multiplicateur (2), on mesure en même temps en continu la teneur en $O_2$ dans le gaz épuré, $O_2$ist et on envoie également au multiplicateur (2) la teneur en $O_2$ $O_2$ist' relevée dans un premier transducteur (3) de mesure et on effectue dans le multiplicateur (2) une réduction de la valeur de consigne $NO_x$soll en une valeur de consigne réduite $NO_x$soll n en prenant pour la réduction :

$$NO_x \text{soll } n = NO_x \text{ soll} \cdot \frac{(21 - O_2 \text{ ist})}{(21 - 8)}$$

et dans lequel on compare la valeur de consigne réduite $NO_x$soll n à la teneur en $NO_x$ du gaz épuré $NO_x'$ relevée dans un deuxième transducteur (6) de mesure, on envoie à un régulateur (4) la différence xd de régulation qui est obtenue à partir de cette comparaison, on adapte la quantité de $NH_3$ envoyée à l'installation (5) de dénitrification en tant que variable réglante y pour la commande de la teneur en $NO_x$ en tant que variable asservie et dans lequel on envoie tant le début d'une interruption $FP^+$ de la flamme que la fin d'une interruption $FP^-$ de la flamme respectivement comme signal à un générateur (8) de signal binaire, qui envoie au régulateur (4) les signaux retardés dans le temps en tant que début retardé dans le temps d'une interruption $FP_z^+$ de flamme ou en tant que fin retardée dans le temps d'une interruption $FP_z^-$ de flamme, ce régulateur interrompant la régulation lorsqu'il reçoit le signal $FP_z^+$ et réglant la quantité de $NH_3$ à une valeur F1 fixe constante basse par une commande, la teneur en $NO_x$ du gaz épuré $NO_x'$ relevée par le deuxième transducteur (6) de mesure étant envoyée à un organe (7) de mémoire, cette teneur y étant transformée en une valeur F2 fixe constante plus élevée en tant que quantité de $NH_3$ qui est envoyée également au régulateur (4) et dans lequel, dès que le régulateur (4) a reçu le signal $FP_z^-$, la valeur F1 fixe est réglée à la valeur F2 fixe par une commande et la régulation se poursuit ensuite directement.

2. Procédé suivant la revendication 1, dans lequel la valeur F1 fixe constante représente de 6 à 15 % de la quantité de $NH_3$ envoyée directement avant l'interruption de la régulation.

3. Procédé suivant la revendication 1 ou la revendication 2, dans lequel la transformation dans l'organe (7) de mémoire s'effectue par la formation d'une valeur moyenne formée à partir des teneurs en $NO_x$ du gaz épuré, $NO_x'$, mesurées sur un laps de temps de 5 à 40 min.

4. Procédé suivant la revendication 3, dans lequel le laps de temps est compris entre 12 et 18 min.

5. Procédé suivant l'une des revendications 1 à 4, dans lequel les gaz brûlés sont avant l'élimination de $NO_x$ débarrassés après avoir quitté le four de fusion du verre, de $SO_x$, HCl, HF et de poussière.

6. Procédé suivant la revendication 5, dans lequel les gaz brûlés sont débarrassés d'abord de $SO_x$, HCl et HF et sont envoyés ensuite dans un séparateur de poussière par voie électrostatique.

**7.** Procédé suivant la revendication 5 ou 6, dans lequel l'élimination de SOX, HCl et HF s'effectue dans un lit fluidisé par addition de Ca(OH)$_2$.

Fig. 1

Fig. 2

# Fig. 3

EP 0 906 148 B1